## Europäisches Patentamt
## European Patent Office
## Office européen des brevets

(19)

(11) Veröffentlichungsnummer: **0 034 693**
**B1**

(12) **EUROPÄISCHE PATENTSCHRIFT**

(45) Veröffentlichungstag der Patentschrift:
06.06.84

(51) Int. Cl.³: **C 01 B 33/28**

(21) Anmeldenummer: **81100172.6**

(22) Anmeldetag: **13.01.81**

(54) **Verfahren zur Herstellung von Zeolith A.**

(30) Priorität: **26.02.80 DE 3007087**

(43) Veröffentlichungstag der Anmeldung:
**02.09.81 Patentblatt 81/35**

(45) Bekanntmachung des Hinweises auf die Patenterteilung:
**06.06.84 Patentblatt 84/23**

(84) Benannte Vertragsstaaten:
**AT BE CH DE FR GB IT LI NL SE**

(56) Entgegenhaltungen:
**DE - A - 2 651 485**
**DE - A - 2 704 310**
**DE - A - 2 734 296**

**SPRECHSAAL, Band 112, Nr. 12, 1979 F. WOLF et al "Zur Synthese and Anwendung zeolithischer Molekularsiebe, Teil I: Synthese" Seiten 917 bis 922 MANUFACTURING CHEMIST & AEROSOL NEWS, Band 49, Nr. 10, 1978 M. ETTLINGER et al. "Synthetic Zeolites as New Builders for Detergents" Seiten 51 bis 66**

(73) Patentinhaber: **Degussa Aktiengesellschaft, Weissfrauenstrasse 9, D-6000 Frankfurt am Main 1 (DE)**
Patentinhaber: **Henkel Kommanditgesellschaft auf Aktien, Postfach 1100 Henkelstrasse 67, D-4000 Düsseldorf-Holthausen (DE)**

(72) Erfinder: **Strack, Hans, Dr., Siedlungsstrasse 26, D-8755 Alzenau (DE)**

# Beschreibung

Die Erfindung betrifft ein Verfahren zur Herstellung von kristallinem Zeolithpulver des Typs A.

Zeolith A ist ein kristallines Alkalialuminiumsilikat und entspricht in seiner Zusammensetzung der Formel

$$1,0 \pm 0,2 \, M_{2/n}O : Al_2O_3 : 1,85 \pm 0,5 \, SiO_2 \cdot y_2O,$$

wobei M ein Metallkation, n seine Wertigkeit und y ein Wert bis zu 6 bedeuten.

Zeolith A gewinnt in zunehmendem Maße an Bedeutung als Phosphat-Substitut in Waschmitteln. Für diesen Anwendungszweck ist es wünschenswert, daß das kristalline Zeolithpulver des Typs A eine möglichst einheitliche Teilchengröße, d. h. eine möglichst enge Teilchengrößenverteilungskurve aufweist.

Die DE-A-2 734 296 beschreibt ein Verfahren zur Herstellung von feinteiligen, zum Kationenaustausch befähigten wasserunlöslichen Silikaten, mit einem beispielsweise zwischen 3 und 5 Mikrometer liegenden Maximum der Teilchengrößenverteilung. Das Verfahren wird derart durchgeführt, daß man Wasserglaslösung vorlegt und Natriumaluminatlösung hinzugibt. Anschließend wird die Reaktionsmischung erhitzt.

Die DE-A 2 704 310 beschreibt ein Verfahren zur Herstellung von feinteiligen, zum Kationenaustausch befähigten Silikaten, bei dem man wäßrige Alkalialuminatlauge mit wäßriger Alkalisilikatlösung in Gegenwart von überschüssigem Alkali vermischt und die Reaktionsmischung gegebenenfalls recyclierend durch eine Zerkleinerungsvorrichtung führt.

Die DE-A 2 651 437 beschreibt ein Verfahren zur Herstellung eines kristallinen Zeolithpulvers des Typs A mit 50 Gew.-% unter höchstens 5,9 Mikrometer liegenden Teilchen. Dabei werden in eine Vorlage aus Wasser gleichzeitig Natriumaluminatlauge und Alkalisilikatlösung unter Rühren hinzugegeben. Die Mischung wird mit Wasser verdünnt, wonach anschließend weitere Natriumaluminatlauge der gleichen Zusammensetzung und Wasser hinzugegeben wird. Die so erhaltene Synthesemischung wird bei einer Temperatur zwischen 20 und 175°C kristallisiert.

Gegenstand der Erfindung ist ein Verfahren zur Herstellung eines kristallinen Zeolithpulvers des Typs A mit einem Gritgehalt (Teilchen größer 45 μm nach Mocker) von maximal 0,2% und einem Calciumbindevermögen von mindestens 140 mg CaO/g Zeolith, durch Umsetzung von Natriumaluminatlauge mit Wasserglaslösung, welches dadurch gekennzeichnet ist, daß man zur Herstellung eines Zeolithpulvers mit einem mittleren Teilchengrößendurchmesser von 4,3 bis 8,5 μm in eine Vorlage aus 8 bis 10 Volumenteilen Wasser 2 bis 8 Volumenteile Natriumaluminatlauge mit einer Konzentration von 50 bis 200, vorzugsweise 90 bis 150 g/l Al₂O₃ und 30 bis 150, vorzugsweise 60 bis 100 g/l Na₂O und 0,6 bis 3,5 Volumenteile Wasserglaslösung mit einer Konzentration von 90 bis 120, vorzugsweise 100 bis 110 g/l Na₂O und 330 bis 380, vorzugsweise 340 bis 370 g/l SiO₂ gleichzeitig unter Rühren in einem Zeitraum von 5 bis 15 Minuten bei einer Temperatur von 30°C bis 70°C hineingibt, anschließend weitere 15 bis 35 Minuten rührt, anschließend unter Rühren weitere 8 bis 26 Volumenteile derselben Natriumaluminatlauge während eines Zeitraumes von 3 bis 150 Minuten bei einer Temperatur von 30 bis 70°C hinzugibt, dann während eines Zeitraumes von 3 bis 60 Minuten bei einer Temperatur von 30 bis 70°C 1,1 bis 2,6 Volumenteile derselben Wasserglaslösung unter Rühren hinzugibt, die gesamte Reaktionsmischung bei einer Temperatur von 75 bis 110°C 20 bis 180 Minuten nachrührt, abkühlt, das kristalline Reaktionsprodukt abfiltriert und trocknet.

Das erfindungsgemäße Verfahren weist den Vorteil auf, daß sich innerhalb des angegebenen Bereiches des mittleren Teilchendurchmessers von 4,3 bis 8,5 μm jeder mittlere Teilchendurchmesser einstellen läßt, wobei das erhaltene kristalline Zeolithpulver des Typs A einen Gritgehalt (Teilchen größer 45 μm nach Mocker) von maximal 0,2% und ein Calciumbindevermögen von mindestens 140 mg CaO/g Zeolith aufweist.

## Beispiel 1

In einem Reaktionsgefäß werden 10 l Wasser vorgelegt. In diese Vorlage werden gleichzeitig unter Rühren bei einer Temperatur von 38°C 2 l Natriumaluminatlauge mit einer Konzentration von 138 g/l Na₂O und 83 g/l Al₂O₃ und 2,5 l Wasserglaslösung mit einer Konzentration von 100 g/l Na₂O und 349 g/l SiO₂ während einer Zeit von 10 Minuten eingegeben. Anschließend wird noch weitere 30 Minuten gerührt.

Danach werden bei einer Temperatur von 38°C und unter Rühren weitere 18 l Natriumaluminatlauge derselben Konzentration während einer Zeit von 60 Minuten und gleichzeitig weitere 2,5 l Wasserglaslösung derselben Konzentration während eines Zeitraumes von 30 Minuten hinzugegeben.

Anschließend wird noch für 60 Minuten bei einer Temperatur von 95°C nachgerührt.

Danach wird das Reaktionsgemisch abgekühlt und das kristalline Produkt abfiltriert und getrocknet.

Das erhaltene kristalline Zeolithpulver des Typs A weist einen mittleren Teilchendurchmesser von 6,2 μm auf. Das heißt, bei der mittels der Coulter Counters gemessenen Teilchenverteilungskurve liegt der Wert für 50% bei 6,2 μm.

Für den Wert 10 μm wird eine Menge von 4% und für den Wert 15 μm wird eine Menge von 2% ermittelt.

Der Gritgehalt (Teilchen über 45 μm) beträgt nach Mocker 0,014%. Das Calciumbindevermö-

gen beträgt 154 mg CaO/g Zeolith.

## Patentanspruch

Verfahren zur Herstellung eines kristallinen Zeolithpulvers des Typs A mit einem Gritgehalt (Teilchen größer 45 µm nach Mocker) von maximal 0,2% und einem Calciumbindevermögen von mindestens 140 mg CaO/g Zeolith, durch Umsetzung von Natriumaluminatlauge mit Wasserglaslösung, dadurch gekennzeichnet, daß man zur Herstellung eines Zeolithpulvers mit einem mittleren Teilchendurchmesser von 4,3 bis 8,5 µm in eine Vorlage aus 8 bis 10 Volumen-Teilen Wasser 2 bis 8 Volumenteile Natriumaluminatlauge mit einer Konzentration von 50 bis 200 g/l $Al_2O_3$ und 30 bis 150 g/l $Na_2O$ und 0,6 bis 3,5 Volumenteile Wasserglaslösung mit einer Konzentration von 90 bis 120 g/l $Na_2O$ und 330 bis 380 g/l $SiO_2$ gleichzeitig unter Rühren in einem Zeitraum von 5 bis 15 Minuten bei einer Temperatur von 30 bis 70°C hinzugibt, anschließend weitere 15 bis 35 Minuten rührt, anschließend unter Rühren weitere 8 bis 26 Volumenteile derselben Natriumaluminatlauge während eines Zeitraumes von 3 bis 150 Minuten bei einer Temperatur von 30 bis 70°C hinzugibt, gleichzeitig oder anschließend während eines Zeitraumes von 3 bis 60 Minuten bei einer Temperatur von 30 bis 70°C 1,1 bis 2,6 Volumenteile derselben Wasserglaslösung unter Rühren hinzugibt, die gedamte Reaktionsmischung bei einer Temperatur von 75 bis 110°C 20 bis 180 Minuten nachrührt, abkühlt, das kristalline Reaktionsprodukt abfiltriert und trocknet.

## Claim

A process for the production of a crystalline powder of the zeolite A type having a maximum grit proportion (particles greater than 45 µm according to Mocker) of 0,2%, and a calcium binding power of at least 140 mg CaO/g of zeolite, by the reaction of sodium aluminate liquor with water glass solution, characterized in that for the production of a zeolite powder having an average particle diameter of from 4,3 to 8,5 µm, from 2 to 8 parts by volume of sodium aluminate liquor having a concentration of from 50 to 200 g/l of $Al_2O_3$, from 30 to 150 g/l of $Na_2O$, from 0,6 to 3,5 parts by volume of water glass solution having a concentration of from 90 to 120 g/l of $Na_2O$ and from 330 to 380 g/l of $SiO_2$ are simultaneously added to a starting solution of from 8 to 12 parts by volume of water over a period of from 5 to 15 minutes with stirring at a temperature of from 30 to 70°C, the mixture ist then stirred for a further 15 to 35 minutes, a further 8 to 26 parts by volume of the same sodium aluminate liquor are then added with stirring at a temperature of from 30 to 70°C over a period of from 3 to 150 minutes, from 1,1 to 2,6 parts by volume of the same water glass solution are simultaneously or subsequently added with stirring at a temperature of from 30 to 70°C over a period of from 3 to 60 minutes, the complete reaction mixture is then stirred for 20 to 180 minutes at a temperature of from 75 to 110°C, cooled and the crystalline reaction product is filtered and dried.

## Revendication

Procédé pour la fabrication d'une zéolite du type A en poudre cristalline présentant une teneur en grains grossiers (particules supérieures à 45 microns suivant Mocker) de 0,2% au maximum, et une capacité de fixation du calcium d'au moins 140 mg de CaO/g de zéolite, par réaction de lessive d'aluminate de sodium avec une solution de silicate de sodium, procédé caractérisé en ce que, pour fabriquer une poudre de zéolite ayant un diamètre moyen de particules de 4,3 à 8,5 microns, on introduit dans une charge préalable de 8 à 10 parties en volume d'eau, 2 à 8 parties en volume de lessive d'aluminate de sodium à la concentration de 50 à 200 g/l d'$Al_2O_3$, et 30 à 150 g/l de $Na_2O$, et 0,6 à 3,5 parties en volume de solution de silicate de sodium à la concentration de 90 à 120 g/l de $Na_2O$ et 330 à 380 g/l de $SiO_2$, simultanément et en agitant, en un espace de temps de 5 à 15 minutes, à une température de 30 à 70°C, agite ensuite pendant 15 à 35 min, puis ajoute, tout en agitant, encore 8 à 26 parties en volume de la même lessive d'aluminate de sodium, en un espace de temps de 3 à 150 min, à une température de 30 à 70°C, puis ajoute simultanément ou successivement, tout en agitant, en un espace de temps de 3 à 60 min, à une température de 30 à 70°C, 1,1 à 2,6 parties en volume de la même solution de silicate de sodium, continue à agiter le même mélange réactionnel à une température de 75 à 110°C pendant 20 à 180 min, refroidit, reprend par filtration le produit cristallin de la réaction et sèche.